**Europäisches Patentamt**

**European Patent Office**

**Office européen des brevets**

(19)

(11) Numéro de publication : **0 421 892 B1**

# FASCICULE DE BREVET EUROPEEN

(12)

(45) Date de publication du fascicule du brevet :
03.08.94 Bulletin 94/31

(51) Int. Cl.⁵ : **H02H 3/093, H02H 5/04**

(21) Numéro de dépôt : **90420385.8**

(22) Date de dépôt : **24.08.90**

(54) **Disjoncteur comportant un déclencheur électronique.**

(30) Priorité : **13.09.89 FR 8912083**

(43) Date de publication de la demande :
**10.04.91 Bulletin 91/15**

(45) Mention de la délivrance du brevet :
**03.08.94 Bulletin 94/31**

(84) Etats contractants désignés :
**BE CH DE ES GB IT LI SE**

(56) Documents cités :
**EP-A- 0 005 324**
**EP-A- 0 115 733**
**EP-A- 0 133 969**
**DE-A- 3 320 391**
**GB-A- 1 056 308**
**US-A- 3 863 186**

(73) Titulaire : **MERLIN GERIN**
**2, chemin des Sources**
**F-38240 Meylan (FR)**

(72) Inventeur : **Tripodi, Paul**
**Merlin Gerin,**
**Sce. Brevets**
**F-38050 Grenoble Cédex (FR)**

(74) Mandataire : **Jouvray, Marie-Andrée et al**
**MERLIN GERIN**
**Sce. Propriété Industrielle**
**F-38050 Grenoble Cédex 9 (FR)**

## Description

L'invention concerne un disjoncteur électrique à boîtier moulé, comportant au moins une plage de raccordement à un conducteur destiné à être protégé par le disjoncteur, des moyens de détection du courant parcourant le conducteur, des moyens de mesure de la température dans une zone prédéterminée du disjoncteur, un déclencheur électronique, auquel sont appliqués les signaux de sortie des moyens de détection de courant et des moyens de mesure de la température, assurant au moins une fonction de déclenchement temporisé de manière à élaborer un ordre de déclenchement lors d'un dépassement de seuils prédéterminés par le courant, le déclencheur comportant des moyens destinés à modifier la temporisation en fonction de la température mesurée lors de la fermeture du disjoncteur, le disjoncteur comportant des moyens de déclenchement contrôlés par ledit ordre de déclenchement.

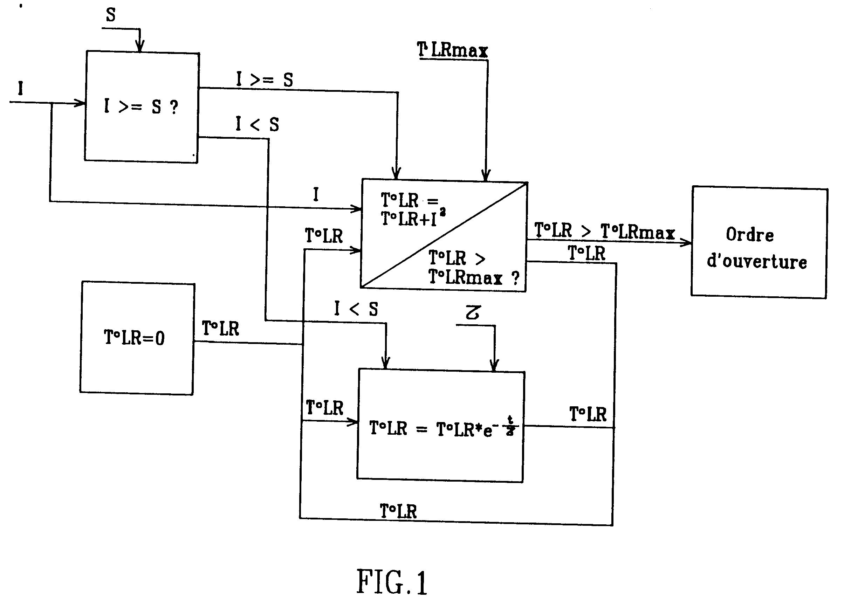

Les déclencheurs électroniques classiques ne tiennent pas compte de l'histoire thermique du système qui a été déconnecté par le disjoncteur associé lors d'un réenclenchement du disjoncteur. Ceci peut, dans certains cas, conduire à un échauffement dangereux du système. En pratique, les déclencheurs électroniques classiques simulent mathématiquement l'état thermique du système en cas de défaut court ou long retard, la temporisation étant alors inversement proportionnelle au carré du courant de défaut. Cette simulation partielle de l'état thermique du système ne tient compte que de l'échauffement dû au courant de défaut et du refroidissement dû à une éventuelle diminution du courant de défaut pendant la durée de la temporisation. L'organigramme de la figure 1 schématise la fonction long retard d'un déclencheur à microprocesseur classique. Une grandeur $T°LR$, image thermique représentative de l'état thermique du système protégé par le disjoncteur, est initialement fixée à une valeur minimum, 0 sur la figure. Le courant de phase mesuré $I$, en fait le courant le plus élevé parcourant l'une des phases du réseau protégé par le disjoncteur, est comparé à un seuil long retard $S$ réglable. Lorsque ce courant est supérieur ou égal au seuil $S$ la grandeur $T°LR$ est remplacée par la somme $T°LR + I^2$, simulant ainsi l'échauffement du système. La nouvelle valeur $T°LR$, ainsi calculée, est comparée à une valeur maximale $T°LR$ max réglable. Tant que cette valeur maximale n'est pas atteinte le processus se poursuit, conduisant ainsi à une temporisation inversement proportionnelle au carré du courant de défaut. Lorsque la valeur maximale est dépassée le déclencheur produit un ordre d'ouverture du disjoncteur associé. Si le courant est inférieur au seuil $S$, la grandeur $T°LR$ est décrémentée, par exemple remplacée par $T°LR \times e^{-t/\tau}$, $\tau$ étant une constante de temps de refroidissement prédéterminée et $t$ le temps écoulé depuis l'arrêt du défaut, simulant ainsi le refroidissement du système. Lorsque $T°LR$ atteint la valeur minimum, 0 sur la figure, la grandeur $T°LR$ reste inchangée tant que le courant $I$ reste inférieur au seuil $S$. Ainsi, si les conditions nécessaires à provoquer un déclenchement disparaissent avant le déclenchement, il n'y a pas d'ordre de déclenchement et le retour à la normale se fait de façon progressive de manière à simuler une mémoire thermique du système.

Il est de plus souhaitable, lors du réenclenchement d'un disjoncteur, de tenir compte de l'état thermique du système qui a été déconnecté par le disjoncteur. Cet état thermique dépend à la fois de l'état thermique existant juste avant le déclenchement et du temps écoulé depuis le déclenchement, temps pendant lequel le système s'est refroidi.

Il a été proposé (US-A- 4.616.324) de poursuivre la simulation du refroidissement après un déclenchement du disjoncteur en utilisant un circuit RC chargé au moment du déclenchement.

Une telle approche ne tient cependant pas compte de tous les facteurs entrant en jeu dans l'échauffement du système et, dans bien des cas, l'image thermique ainsi obtenue n'est pas représentative de l'état réel du système.

Il a, par ailleurs, été proposé (US-A- 4.631.625) d'initialiser les caractéristiques de déclenchement d'un déclencheur électronique, lors de la fermeture du disjoncteur, en fonction de la valeur de thermistances disposées sur les conducteurs protégés par le disjoncteur. La disposition de thermistances sur les conducteurs pose des problèmes, notamment de fixation et d'isolement et la température des conducteurs n'est, en fait, pas réellement représentative de l'échauffement du système.

La présente invention a pour but un disjoncteur à déclencheur électronique permettant de mieux prendre en compte l'histoire thermique du système à protéger.

Selon l'invention ce but est atteint par le fait que les moyens de mesure de la température comportent des moyens de mesure de la température dans une zone froide du boîtier et des moyens de mesure de la température dans une zone chaude du boîtier, à proximité de la ou des plages de raccordement, le déclencheur comportant des moyens de calcul de la différence de température entre les zones chaude et froide, et des moyens destinés à modifier la temporisation de la fonction de déclenchement de manière inversement proportionnelle à la différence de température mesurée à la fermeture du disjoncteur.

Selon un mode de réalisation préférentiel de l'invention, le déclencheur comportant, pour réaliser la fonction de déclenchement temporisé, des moyens de comparaison d'une grandeur représentative de l'état thermique du disjoncteur à une valeur maximale prédéterminée, des moyens d'incrémentation de cette grandeur lorsque le courant I est supérieur ou égal à un seuil de déclenchement prédéterminé et de décrémentation lorsque le courant est inférieur audit seuil, les moyens destinés à modifier la temporisation comportent des moyens d'initialisation de ladite grandeur lors d'une fermeture du disjoncteur, la grandeur initiale étant proportionnelle à la différence de température mesurée à la fermeture du disjoncteur.

Le déclencheur peut de plus comporter des moyens de mise en mémoire des températures chaude et froide mesurées juste avant l'émission d'un ordre de déclenchement, des moyens de lecture des valeurs mémorisées lors d'une fermeture ultérieure du disjoncteur et des moyens de calcul de la différence de température entre les températures chaude et froide au déclenchement, la grandeur initiale étant telle que le rapport entre cette grandeur initiale et la valeur maximale de la grandeur représentative de l'état thermique du disjoncteur soit proportionnel au rapport entre la différence de température à la fermeture du disjoncteur et une différence de température maximale, cette dernière étant égale à la différence de température mesurée lors du déclenchement précédent du disjoncteur.

La mesure de la température est réalisée de préférence au moyen de thermistances disposées, d'une part, vers la face avant du déclencheur et, d'autre part, au fond du boîtier du disjoncteur, au voisinage d'un élément isolant, près de la ou des plages de raccordement du disjoncteur. De cette manière la capacité thermique du boîtier du disjoncteur est utilisée pour simuler l'état thermique du système protégé par le disjoncteur.

D'autres avantages et caractéristiques ressortiront plus clairement de l'exposé qui va suivre de modes particuliers de réalisation de l'invention, donnés à titre d'exemples non limitatifs et représentés aux dessins annexés sur lesquels:

La figure 1 schématise la fonction long retard d'un déclencheur électronique classique;

La figure 2 représente schématiquement une variante d'implantation de thermistances dans le boîtier d'un disjoncteur selon l'invention;

La figure 3 représente les variations correspondantes du courant et de la température dans un disjoncteur selon la figure 2;

Les figures 4 et 5 représentent deux variantes de l'organigramme de la fonction long retard du déclencheur d'un disjoncteur selon l'invention;

Les figures 6 et 7 illustrent l'influence de l'initialisation de la grandeur T°LR sur la temporisation;

La figure 8 représente les valeurs des températures mesurées dans un disjoncteur particulier.

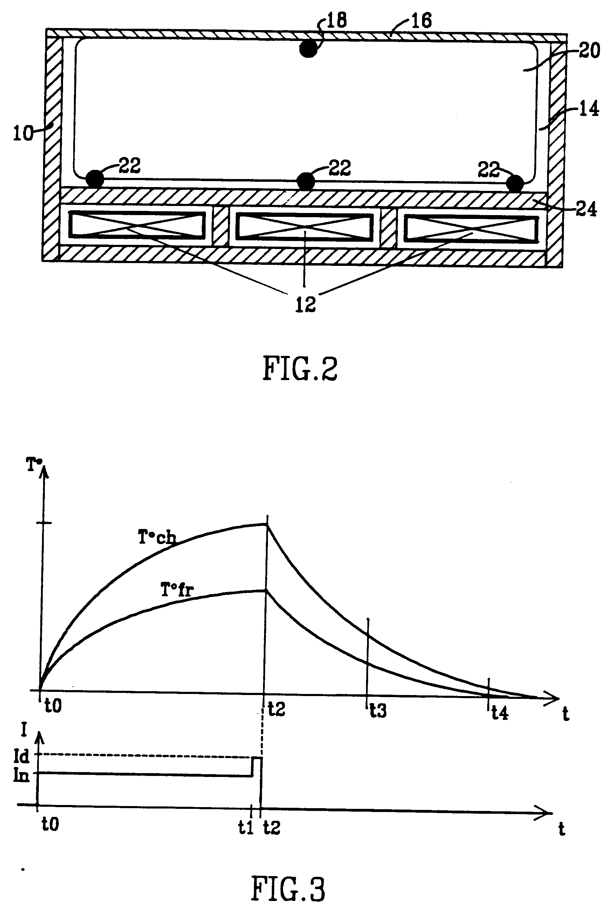

Sur la figure 2, le boîtier 10 d'un disjoncteur tripolaire est représenté schématiquement en coupe. Les plages 12 de raccordement du disjoncteur, qui constituent les enroulements primaires des transformateurs de courant (non représentés) du disjoncteur, sont disposées dans le fond du boîtier, tandis que le déclencheur électronique 14 est disposé dans la partie avant du boîtier, fermée par un couvercle 16 constituant la face avant du déclencheur. Une thermistance 18 est disposée dans une zone froide du boîtier. Dans le mode de réalisation représenté sur la figure 2, la thermistance 18 est disposée sur une plaque de circuit imprimé 20 du déclencheur, de manière à être située à proximité de la face avant 16 du déclencheur, de préférence en contact avec cette face. Des thermistances 22 sont disposées dans une zone chaude du boîtier, à proximité des plages de raccordement. Dans le mode de réalisation selon la figure 2, les thermistances 22 sont également disposées sur la plaque de circuit imprimé 20, de manière à être situées à proximité d'une paroi 24 du boîtier séparant les plages de raccordement 12 du déclencheur 14, de préférence en contact avec la paroi 24.

Les thermistances permettent de mesurer respectivement la température T°fr de la zone froide et T°ch de la zone chaude. Une seule thermistance 18 suffit à donner la valeur de la température dans la zone froide. Par contre, pour compenser la faible conductivité thermique du matériau (matière plastique) constituant le boîtier il est préférable d'utiliser une thermistance 22 à proximité de chaque source de chaleur dans la zone chaude. Sur la figure 2, une thermistance 22 est disposée en regard de chacune des plages de raccordement 12 du disjoncteur. La température de la zone chaude est alors fournie par la température la plus élevée mesurée par les thermistances 22.

La figure 3 illustre les variations de température en fonction du temps lorsque le courant correspondant au courant minimal In entre des instants t0 et t1, prend une valeur de défaut Id à l'instant t1 entraînant l'ouverture du disjoncteur à l'instant t2 après une certaine temporisation. Lorsque le disjoncteur est froid, hors service depuis suffisamment longtemps, les deux zones sont à la même température, correspondant à la température ambiante. A l'instant t0 le disjoncteur est fermé et, jusqu'à l'instant t1, parcouru par un courant, In sur la figure 3. Les températures des zones froide et chaude augmentent, la différence de température entre les deux zones, qui augmente, se stabilisant au bout d'un certain temps (à titre d'exemple 2 à 3 h). Après ouverture du disjoncteur, à l'instant t2, les températures décroissent. La différence DT° = T°ch - T°fr entre les températures des zones chaude et froide est fonction du temps écoulé depuis le déclenchement et cette différence est utilisée pour modifier la temporisation de la fonction de déclenchement au moment de la fermeture du disjoncteur.

3

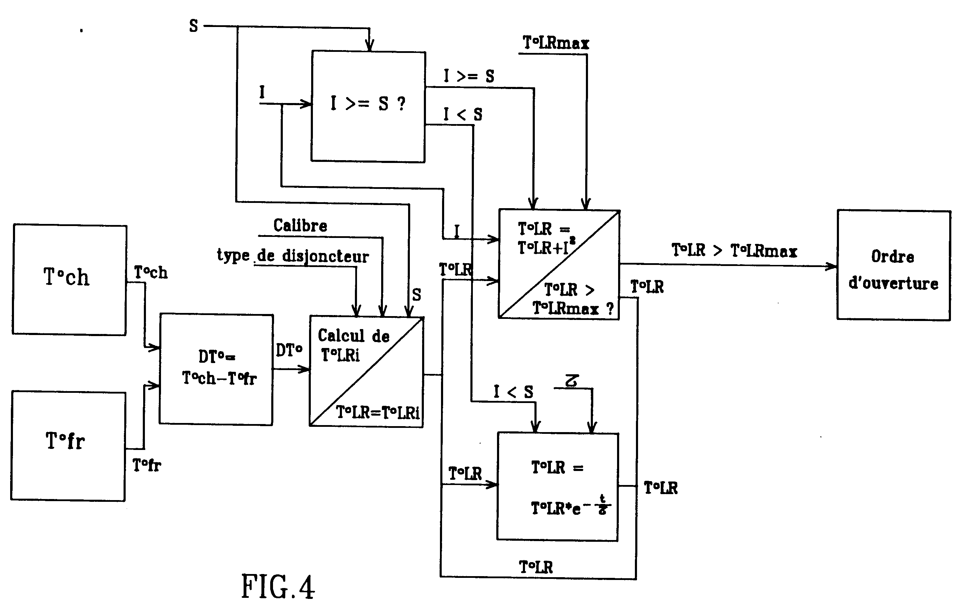

Comme représenté à la figure 4, la différence DT°, mesurée à la fermeture du disjoncteur, est utilisée pour calculer la valeur initiale T°LRi de la grandeur T°LR représentative de l'état thermique du système.

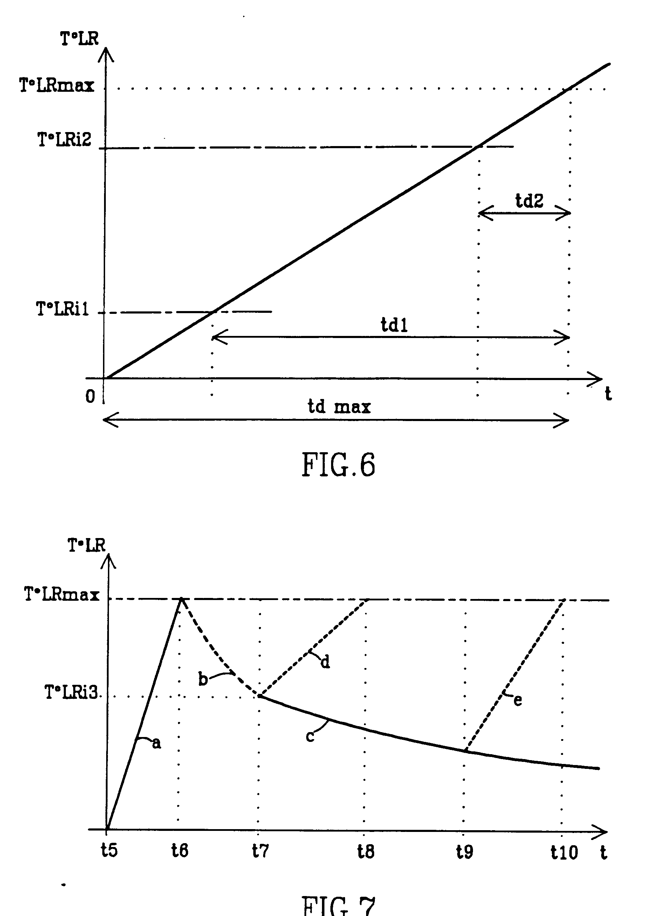

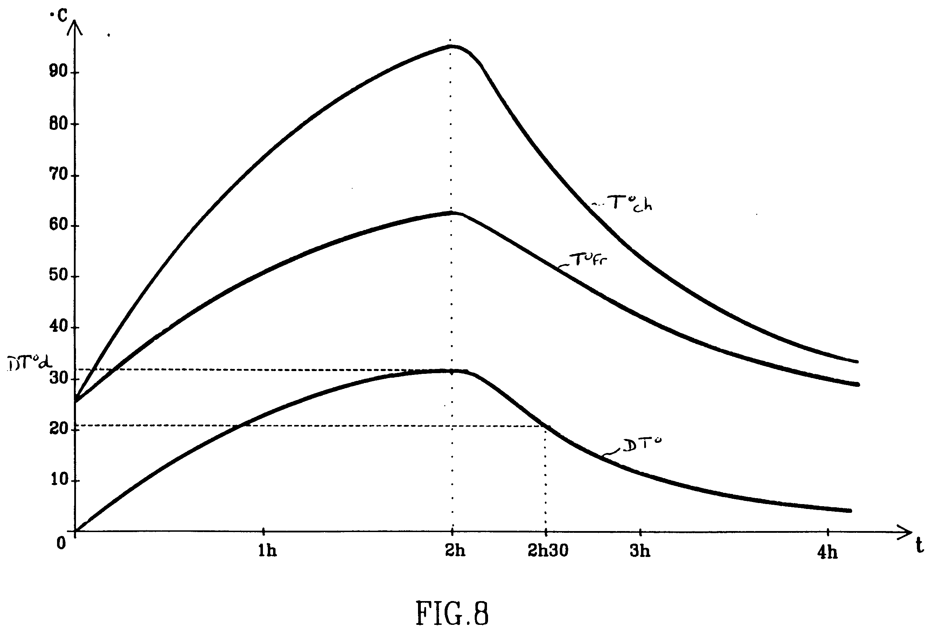

L'influence de l'initialisation de la grandeur T°LR sur la temporisation est illustrée sur les figures 6 et 7. Sur la figure 6 on a représenté la variation de T°LR, en fonction du temps, entre le moment de l'apparition d'un défaut et le déclenchement, en supposant que le courant de défaut Id est constant. L'échauffement du système, proportionnel au carré du courant de défaut, conduit alors à une croissance linéaire de T°LR de sa valeur initiale à la valeur T°LRmax conduisant à un déclenchement. Si, lors de la fermeture du disjoncteur le disjoncteur est froid, T°LR est initialement à zéro et la durée tdmax de la temporisation est fonction du carré du courant de défaut. Par contre, si après un déclenchement (en t2 sur la figure 3), le disjoncteur se referme avant que la température de la zone chaude ne soit revenue à la température de la zone froide, respectivement aux instants t3 ou t4 sur la figure 3, T°LR est initialement mis à une valeur T°LRi2, respectivement T°LRi1, d'autant plus élevée que le temps séparant le déclenchement du réenclenchement est court, c'est à dire d'autant plus élevé que la différence de température DT° est élevée. Plus T°LRi est élevé plus la durée de temporisation est réduite : pour un même courant de défaut, donc pour une même variation de T°LR en fonction du temps, la durée td2 de la temporisation correspondant à une valeur initiale T°LRi2 élevée est inférieure à la durée td1 de la temporisation correspondant à une valeur initiale T°LRi1 moins élevée (fig. 6). La durée td de la temporisation est donnée par :

$$td/tdmax = (T°LRmax - T°LRi) / T°LRmax).$$

La figure 7 représente un exemple des variations de la grandeur T°LR en fonction du temps. Le disjoncteur ayant été fermé alors que la différence de température DT° est nulle, la valeur initiale de T°LR est mise à zéro. A l'instant t5, un courant de défaut apparaît et la valeur de T°LR croit linéairement (courbe a), proportionnellement au carré du courant de défaut jusqu'à l'instant t6 où elle atteint la valeur T°LRmax, provoquant le déclenchement du disjoncteur. Lors du réenclenchement du disjoncteur à l'instant t7, T°LR est initialisée à la valeur T°LRi3 fonction de la différence de température DT° mesurée à cet instant par les thermistances (fig. 4). Cette décroissance (courbe b) de T°LRmax à T°LRi3 est une décroissance exponentielle et s'effectue avec une constante de temps représentative de la constante de temps de refroidissement du boitier. Si le courant reste inférieur au seuil long retard (S, fig. 4), la valeur de T°LR décroît exponentiellement avec la constante de temps $\tau$ (fig. 4) prédéterminée fixée dans le déclencheur électronique jusqu'à sa valeur minimale, soit jusqu'à zéro sur la figure 7 (courbe c). La constante de temps $\tau$ est supérieure à la constante de temps de refroidissement du boîtier car, le disjoncteur étant fermé, le système reste parcouru par le courant nominal limitant ainsi son refroidissement. Si un courant de défaut est présent lors du réenclenchement à l'instant t7, la valeur de T°LR croît de la valeur initiale T°LRi3 jusqu'à la valeur de déclenchement T°LRmax, provoquant un nouveau déclenchement à l'instant t8 (courbe d). La courbe e représente l'apparition d'un courant de défaut à l'instant t9 conduisant à un déclenchement à l'instant t10. Les pentes des droites a,d et e schématisent des courants de défaut différents.

Ainsi, lorsque le disjoncteur est fermé, le déclencheur calcule la variation de la grandeur T°LR en fonction du courant et du seuil long retard (S) : courbes a, d ou e si le courant est supérieur au seuil S et courbe c si le courant est inférieur au seuil S. Les thermistances servent, quant à elles, à déterminer la valeur initiale T°LRi au moment d'un réenclenchement du disjoncteur de manière à tenir compte du refroidissement du boîtier après ouverture du disjoncteur (courbe b).

La valeur initiale T°LRi est proportionnelle à la différence de température DT° entre les zones chaude et froide du disjoncteur mesurée au moment de la fermeture du disjoncteur (fig. 3 et 6). Cette valeur initiale dépend également du type de disjoncteur, du calibre du disjoncteur et du réglage du seuil long retard S (fig. 4). A titre d'exemple, un disjoncteur fonctionnant à ses limites d'utilisation conduira à une différence de température DT° très élevée alors que pour un disjoncteur surdimensionné l'échauffement sera moins important et cette différence sera faible. Pour un disjoncteur donné les valeurs de T°LRi en fonction de DT° peuvent être déterminées expérimentalement, et dans le cas d'un déclencheur à microprocesseur une table de correspondance est mise en mémoire dans une mémoire du déclencheur. Dans ce cas, lors de la fermeture du disjoncteur, les valeurs T°ch et T°fr mesurées par les thermistances sont lues par le déclencheur, la différence DT° est calculée et la valeur correspondante de T°LRi obtenue à partir de la table.

La valeur initiale T°LRi peut également être obtenue par calcul à partir de la formule générale :

T°LRi = T°LRimin + (T°LRimax - T°LRimin) (DT°-DT°min)/(DT°max -DT°min) dans laquelle toutes les grandeurs T°LR sont exprimées en pourcentage de T°LRmax et T°LRimin, dans laquelle T°LRimax, DT°max et DT°min sont des valeurs prédéfinies dépendant notamment du type de disjoncteur, du calibre et du seuil S de déclenchement long retard. Dans le cas le plus simple DT°min =0, T°LRimin = 0, et T°LRimax = T°LRmax, et en conséquence :

$$T°LRi / T°LRmax = DT° / DT°max.$$

Alors T°LRi peut varier entre 0 et T°LRmax, proportionnellement à DT° qui varie entre 0 et DT°max, DT°max étant, pour un disjoncteur donné, la différence de température maximale, définie expérimentalement susceptible d'être atteinte par ce disjoncteur (fig. 3).

Selon un mode de réalisation préférentiel la variation de T°LRi est limitée à une gamme allant de T°LRimin à T°LRimax. T°LRimax, correspondant par exemple à 8O % T°LRmax, est destiné à introduire une temporisation minimum, fixée arbitrairement, en cas de fermeture sur défaut. En pratique la valeur T°LRimin sera généralement choisie égale à 0, le choix d'une valeur différente revenant à diminuer systématiquement la temporisation (tdmax, fig. 6). La formule devient alors :

$$T°LRi / T°LRimax = DT° / DT°max.$$

T°LRi peut alors varier entre 0 et T°LRimax, soit entre 0 et 80 % de T°LRmax, proportionnellement à DT°, qui varie entre 0 et DT°max.

La valeur DT°min peut être choisie différente de zéro, par exemple DT°min = 20 % de DT°max. La valeur initiale T°LRi est alors égale à sa valeur minimale, généralement zéro, dès que la différence de température entre les zones chaude et froide du différence de température entre les zones chaude et froide du disjoncteur est inférieure à DT°min. Dans ce cas le disjoncteur est considéré comme étant suffisamment refroidi et la température maximale est maintenue.

A titre d'exemple, pour un disjoncteur de calibre 1000 A, dont le seuil long retard S est réglé à 1000 A, des mesures expérimentales ayant montré que la différence de température à 1000 A se stabilise autour de 30°C, la valeur DT°max est fixée à 3O°C.

Pour un disjoncteur de même type, dont le seuil long retard S serait réglé à 400 A, la valeur DT°max sera réduite en conséquence.

A titre d'exemple, pour un disjoncteur de calibre 1000 A, pour lequel le réglage du seuil S correspond à une différence de température DTmax de 3O°C, T°LRimin étant choisi égal à zéro, T°LRimax à 8O % de T°–LRmax, et DT°min à 20 % de DT°max, les températures étant exprimées en pourcentage de DT°max, la valeur initiale T°LRi, exprimée en pourcentage de T°LRmax, est donnée par :

$$T°LRi = 0 + (80 - 0) (DT°\% - 20\%)/(100\% - 20\%)$$
$$T°LRi = (DT° - 20)\%$$

Pour DT° = 20°C, soit 66% de DT°max on obtient :

T°LRi = 46% de T°LRmax, d'où td : 64% de tdmax.

Le tableau suivant donne différentes valeurs de T°LRi en fonction des valeurs correspondantes de DT° à la fermeture du disjoncteur, dans l'exemple ci-dessus :

| DT° (°C)       | 0 | 5 | 10 | 15 | 20 | 25 | 30 |
|----------------|---|---|----|----|----|----|-----|
| DT° (%DT°max)  | 0 | 16| 33 | 50 | 66 | 83 | 100 |
| TLRi (%TLRimax)| 0 | 0 | 13 | 30 | 46 | 63 | 80 |

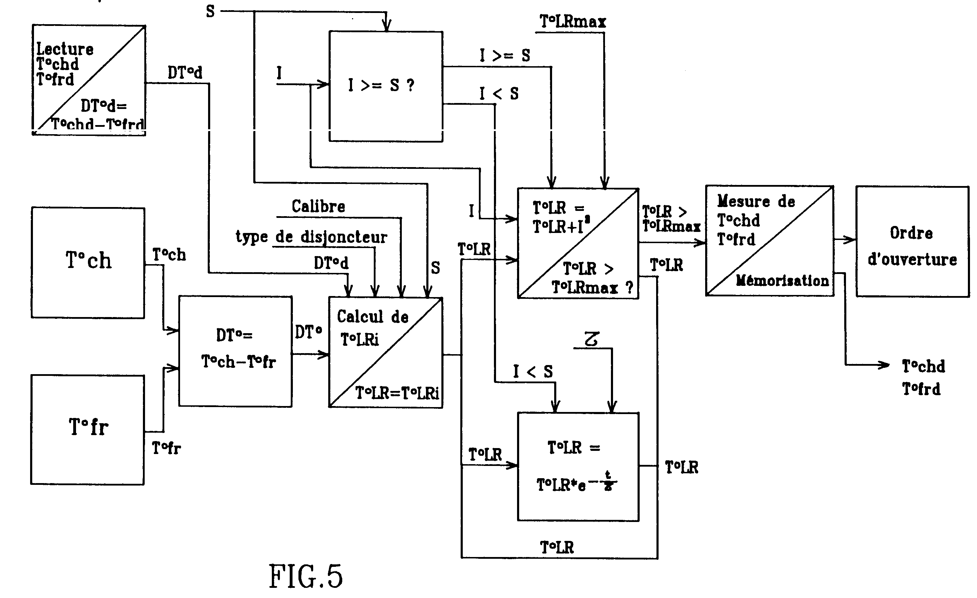

Selon une autre variante de réalisation de l'invention, illustrée sur la figure 5, la valeur DT°max est également fonction de la différence DT°d entre les températures T°chd et T°frd mesurées au moment du déclenchement (instants t2 ou t6 respectivement sur les figures 3 et 7), juste avant l'envoi de l'ordre de déclenchement. Les valeurs mesurées sont mises en mémoire, dans une mémoire EEPROM, dans le déclencheur et lues par le déclencheur lors de la fermeture du disjoncteur. Le déclencheur calcule alors la différence de température DT°d au déclenchement, et après mesure de la différence de température DT° au réenclenchement, calcule la valeur initiale T°LRi. La prise en compte de DT°d pour la détermination de DT°max, et donc pour le calcul de la valeur initiale T°LRi, permet de mieux tenir compte des conditions réelles de fonctionnement du disjoncteur. A titre d'exemple, avec DT°min=0, T°LRimin=0 et T°LRimax=80% de T°LRmax, supposons que DT°max correspondant au type de disjoncteur, au calibre et au seuil S soit égal à 60°C. Si au moment de réenclenchement DT°=30°C, soit 50% de DT°max, T°LRi=40% de T°LRmax. Si la différence de température à l'instant du déclenchement est nettement inférieure à DT°max, par exemple DT°d =40°C, la valeur DT°= 30°C est obtenue plus rapidement, donc le refroidissement a été moins important et il est souhaitable de réduire la temporisation de façon plus importante, et en conséquence d'augmenter la valeur initiale T°LRi. Ceci est obtenu en remplaçant DT°max théorique par DT°d.

La valeur initiale T°LRi étant inversement proportionnelle à DT°max, elle augmente bien lorsque DT°d diminue. Dans l'exemple ci-dessus, si DT°max=DT°d=40°C, on obtient T°LRi=60% de T°LRmax pour DT°=30°C, soit 75% de DT°d et T°LRi=40% de T°LRmax pour DT°=20°C, soit 50% de DT°d.

Dans l'exemple ci-dessus, DT°max est égale à la valeur DT°d mesurée lors du déclenchement : DT°max=DT°d. Il est cependant possible, comme dans le mode de réalisation selon la figure 5, de faire intervenir également le calibre, le seuil S et le type de disjoncteur pour déterminer DT°max. En pratique, dans ce dernier cas, un DTmax théorique est, comme dans le cas de la figure 5, déterminé et normalement utilisé mais est corrigé, par exemple si le réglage du seuil S a été modifié pendant l'ouverture.

Dans tous les cas la valeur initiale T°LRi est inversement proportionnelle à une différence de température DT°max qui est fonction du type de disjoncteur, du calibre, du seuil S et/ou de la différence de température DT°d mesurée au moment du déclenchement précédent.

La valeur DT°min peut être déterminée de manière à ajuster la constante de temps de refroidissement réelle du disjoncteur à une constante de temps prédéterminée inférieure. On a, à titre d'exemple représenté sur la figure 8 les variations de température mesurées dans un déclencheur tripolaire de calibre 1000 A. La différence de température maximale DT°d obtenue au moment du déclenchement après 2 h d'échauffement est de 32°C. Une demi-heure après le déclenchement la différence de température DT° est d'environ 66% de DTd. Si DT° peut varier entre DT°max=DT°d et DT°min=0, la constante de temps de refroidissement est donnée par $t/ln(DT°max/DT°)=0,5/ln1,5=1h14$. Si l'on relève DT°min, cette constante de temps est donnée par : $t/ln(DT°max/(DT°-DT°min))$. On peut vérifier que pour DT°min=20% de DT°max on obtient une constante de temps de 38 mn. On peut donc, en ajustant DT°min modifier artificiellement la constante de temps de refroidissement du boîtier du disjoncteur de manière à la rapprocher de la constante de temps du système protégé par le disjoncteur.

Dans le mode de réalisation représenté sur la figure 2, les thermistances de la zone chaude sont en contact avec la paroi 24 du boîtier du disjoncteur. L'invention n'est pas limitée à une telle disposition. Il suffit que les thermistances soient disposées dans une partie du boîtier dont la température est représentative de l'échauffement et du refroidissement du système. L'échauffement du système étant dû au courant qui le parcourt, les thermistances de la zone chaude sont disposées à proximité des plages conductrices 12. Si elles sont disposées directement sur ces plages elles se refroidissent très vite après la coupure du courant et leur température n'est pas représentative du refroidissement du système. L'inertie thermique du boîtier moulé permet d'obtenir une bonne image thermique du système et en disposant les thermistances sur le boîtier, à proximité des plages conductrices 12, cette propriété est mise à profit pour simuler le refroidissement du système. On peut également utiliser l'inertie thermique de câbles isolés connectés aux plages conductrices et disposés à proximité de celles-ci. Ainsi, les thermistances seront disposées à proximité d'un élément isolant, de préférence une paroi du boîtier, situé à proximité d'au moins une plage conductrice de courant. Les thermistances seront de préférence disposées en contact avec cet élément isolant. Le déclencheur peut tenir compte dans le calcul de la valeur initiale T°LRi de l'écart éventuel existant entre la constante de temps de refroidissement du boîtier, déterminée expérimentalement, et la constante de temps de refroidissement du système protégé par le disjoncteur, la correction s'effectuant par le choix de la constante DT°min.

Les thermistances peuvent de plus être utilisées par le déclencheur pour assurer une fonction de déclenchement thermique si la température dans le disjoncteur dépasse une valeur prédéterminée.

L'invention a été décrite ci-dessus en référence à la fonction de déclenchement long retard d'un déclencheur. Elle peut être utilisée de la même façon pour les autres fonctions de déclenchement. Les deux modes de réalisation des figures 4 et 5 sont adaptés aux deux fonctions de déclenchement : long retard et court retard, car les constantes de temps de déclenchement sont petites par rapport à la fonction mémoire thermique.

Sur la figure 5, seul le déclenchement long retard est traité. Pour un déclenchement court retard on peut mémoriser la dernière valeur de T°LR et considérer cette valeur comme T°LRimax au moment de l'initialisation.

## Revendications

1. Disjoncteur électrique à boîtier moulé (10), comportant au moins une plage (12) de raccordement à un conducteur destiné à être protégé par le disjoncteur, des moyens de détection du courant (I) parcourant le conducteur, des moyens de mesure de la température dans une zone prédéterminée du disjoncteur, un déclencheur électronique, auquel sont appliqués les signaux de sortie des moyens de détection de courant et des moyens de mesure de la température, assurant au moins une fonction de déclenchement temporisé de manière à élaborer un ordre de déclenchement lors d'un dépassement de seuils prédéterminés (S) par le courant (I), le déclencheur comportant des moyens destinés à modifier la temporisation (td) en fonction de la température mesurée lors de la fermeture du disjoncteur, le disjoncteur comportant des moyens de déclenchement contrôlés par ledit ordre de déclenchement, disjoncteur caractérisé en ce que les moyens de mesure de la température comportent des moyens (18) de mesure de la température dans une zone froide du boîtier et des moyens (22) de mesure de la température dans une zone chaude du boîtier, à proximité de la ou des plages de raccordement (12), le déclencheur comportant des moyens de calcul de la différence de température (DT°) entre les zones chaude et froide, et des moyens destinés à modifier la temporisation (td) de la fonction de déclenchement de manière inversement proportionnelle à la différence de température (DT°) mesurée à la fermeture du disjoncteur.

2. Disjoncteur selon la revendication 1, dans lequel, le déclencheur, pour réaliser la fonction de déclenchement temporisé, comporte des moyens de comparaison d'une grandeur (T°LR) représentative de l'état thermique du disjoncteur à une valeur maximale (T°LRmax) prédéterminée, des moyens d'incrémentation ($+I^2$) de cette grandeur lorsque le courant (I) est supérieur ou égal à un seuil (S) de déclenchement prédéterminé et de décrémentation ($xe^{-t/\tau}$) lorsque le courant (I) est inférieur audit seuil (S), disjoncteur caractérisé en ce que les moyens destinés à modifier la temporisation (td) comportent des moyens d'initialisation de ladite grandeur (T°LR) lors d'une fermeture du disjoncteur, la grandeur initiale (T°LRi) étant proportionnelle à la différence de température (DT°) mesurée à la fermeture du disjoncteur.

3. Disjoncteur selon la revendication 2, caractérisé en ce que le déclencheur comporte des moyens de mise en mémoire des températures chaude (T°chd) et froide (T°frd) mesurées juste avant l'émission d'un ordre de déclenchement, des moyens de lecture des valeurs mémorisées lors d'une fermeture ultérieure du disjoncteur et des moyens de calcul de la différence de température (DTd) entre les températures chaude (T°chd) et froide ( T°frd) au déclenchement, la grandeur initiale (T°LRi) étant telle que le rapport entre cette grandeur initiale (T°LRi) et la valeur maximale (T°LRmax) de la grandeur (T°LR) représentative de l'état thermique du disjoncteur soit proportionnel au rapport entre la différence de température (DT°) à la fermeture du disjoncteur et une différence de température maximale (DT°max) cette dernière étant égale à la différence de température (DT°d) mesurée lors du déclenchement précédent du disjoncteur.

4. Disjoncteur selon la revendication 2, caractérisé en ce que le rapport entre la grandeur initiale (T°LRi) et la valeur maximale (T°LRmax) de la grandeur représentative de l'état thermique du disjoncteur est proportionnel au rapport entre la différence de température (DT°) à la fermeture du disjoncteur et une différence de température maximale (DT°max) déterminée en fonction du type de disjoncteur, du calibre du disjoncteur et du seuil de déclenchement (S).

5. Disjoncteur selon l'une des revendications 3 et 4, caractérisé en ce que lorsque la différence de température (DT°) à la fermeture est inférieure ou égale à une valeur minimale (DT°min) prédéterminée, la grandeur initiale (T°LRi) est égale à une valeur initiale minimale (T°LRimin) prédéterminée, et en ce que, lorsque la différence de température (DT°) à la fermeture est supérieure à ladite valeur minimale (DT°min), le rapport entre la grandeur initiale (T°LRi) et la différence entre la valeur maximale (T°LRmax) de la grandeur (T°LR) représentative de l'état thermique du disjoncteur et la valeur initiale minimale (T°LRimin) est proportionnel au rapport entre d'une part, la différence (DT°-DT°min) entre la différence de température (DT°) à la fermeture et la valeur minimale (DT°min) et, d'autre part, la différence (DT°max-DT°min) entre la différence de température maximale (DT°max) et ladite valeur minimale (DT°min).

6. Disjoncteur selon l'une quelconque des revendications 2 à 6, caractérisé en ce que la valeur initiale (T°LRi) est inférieure à une valeur initiale maximale (T°LRimax) prédéterminée inférieure à la valeur maximale (T°LRmax) de la grandeur (T°LR) représentative de l'état thermique du disjoncteur.

7. Disjoncteur selon l'une quelconque des revendications 1 à 6, caractérisé en ce que les moyens (18,22) de mesure de la température comportent des thermistances.

8. Disjoncteur selon la revendication 7, caractérisé en ce qu'il comporte une thermistance (18), destinée à mesurer la température de la zone froide, disposée à proximité de la face avant du déclencheur, et au moins une thermistance (22), destinée à mesurer la température de la zone chaude, au voisinage d'un élément isolant situé à proximité d'une plage (12) de raccordement du disjoncteur, au fond du boîtier du disjoncteur.

9. Disjoncteur selon la revendication 8, caractérisé en ce que la ou les thermistances (22) de mesure de la température de la zone chaude sont disposées de manière à être en contact avec une paroi (24) au fond du boîtier du disjoncteur.

10. Disjoncteur selon la revendication 8, caractérisé en ce que la ou les thermistances (22) de mesure de la température de la zone chaude sont disposées sur des câbles isolants raccordés aux plages de raccordement (12).

**Patentansprüche**

1. Leistungsschalter mit Isolierstoffgehäuse (10), der mindestens ein Anschlußstück (12) zum Anschluß an einen durch den Leistungsschalter zu schützenden Leiter, Mittel zur Erfassung des den Leiter durchfließenden Stroms (I), Mittel zur Messung der Temperatur in einem bestimmten Bereich des Leistungsschalters sowie einen elektronischen Auslöser umfaßt, der mit den Ausgangssignalen der Mittel zur Erfassung des Stroms sowie der Mittel zur Messung der Temperatur beaufschlagt wird und mindestens eine verzögerte Auslösefunktion gewährleistet, derart daß er einen Auslösebefehl erzeugt, wenn der Strom (I) bestimmte Ansprechwerte (S) überschreitet, wobei der Auslöser Mittel zur Veränderung der Zeitverzögerung (td) in Abhängigkeit von der beim Einschalten des Leistungsschalters gemessenen Temperatur aufweist und der Leistungsschalter durch den genannten Auslösebefehl angesteuerte Auslösemittel umfaßt, dadurch gekennzeichnet, daß die Mittel zur Messung der Temperatur Mittel (18) zur Messung der Temperatur in einer Kaltzone des Gehäuses sowie Mittel (22) zur Messung der Temperatur in einer Heißzone des Gehäuses, in der Nähe des oder der Anschlußstücke (12) umfassen und der Auslöser Mittel zur Berechnung der Temperaturdifferenz (DT°) zwischen der Kalt- und der Heißzone sowie Mittel zur Veränderung der Zeitverzögerung (td) der Auslösefunktion in umgekehrt proportionalem Verhältnis zu der beim Einschalten des Leistungsschalters gemessenen Temperaturdifferenz (DT°) aufweist.

2. Leistungsschalter nach Anspruch 1, bei dem der Auslöser zur Wahrnehmung der verzögerten Auslösefunktion Mittel zum Vergleich einer den thermischen Zustand des Leistungsschalters abbildenden Größe (T°LR) mit einem voreingestellten Maximalwert (T°LRmax), Mittel zur Erhöhung (+ I²) dieses Werts für den Fall, daß der Strom (I) einen voreingestellten Ansprechwert (S) erreicht oder überschreitet, sowie zur Verminderung (x e⁻ᵗ/τ) dieses Werts für den Fall, daß der Strom (I) unterhalb des genannten Ansprechwerts (S) liegt, umfaßt, dadurch gekennzeichnet, daß die Mittel zur Veränderung der Zeitverzögerung (td) Mittel zur Festlegung des Anfangswerts der genannten Größe (T°LR) beim Einschalten des Leistungsschalters umfassen und die Anfangsgröße (T°LRi) der beim Einschalten des Leistungsschalters gemessenen Temperaturdifferenz (DT°) proportional ist.

3. Leistungsschalter nach Anspruch 2, dadurch gekennzeichnet, daß der Auslöser Mittel zur Speicherung der unmittelbar vor der Abgabe eines Auslösebefehls gemessenen Heiß- (T°chd) und Kalt-Temperaturwerte (T°frd), Mittel zum Auslesen der bei einem vorausgegangenen Einschaltvorgang des Leistungsschalters gespeicherten Werte sowie Mittel zur Berechnung der zum Zeitpunkt der Auslösung vorhandenen Temperaturdifferenz (DT°d) zwischen den Heiß-(T°chd) und Kalt-Temperaturwerten (T°frd) umfaßt, wobei die Anfangsgröße (T°LRi) so gewählt ist, daß das Verhältnis zwischen dieser Anfangsgröße (T°LRi) und dem Maximalwert (T°LRmax) der den thermischen Zustand des Leistungsschalters abbildenden Größe (T°LR) dem Verhältnis zwischen der Temperaturdifferenz (DT°) beim Einschalten des Leistungsschalters und einer maximalen Temperaturdifferenz (DT°max) proportional ist, und diese maximale Temperaturdifferenz der bei der vorausgegangenen Auslösung des Leistungsschalters gemessenen Temperaturdifferenz (DT°d) entspricht.

4. Leistungsschalter nach Anspruch 2, dadurch gekennzeichnet, daß das Verhältnis zwischen der Anfangsgröße (T°LRi) und dem Maximalwert (T°LRmax) der den thermischen Zustand des Leistungsschalters abbildenden Größe dem Verhältnis zwischen der Temperaturdifferenz (DT°) beim Einschalten des Leistungsschalters und einer maximalen Temperaturdifferenz (DT°max) proportional ist, die in Abhängigkeit vom Typ und von der Nenngröße des Leistungsschalters sowie vom Ansprechwert (S) festgelegt wird.

5. Leistungsschalter nach einem der Ansprüche 3 oder 4, dadurch gekennzeichnet, daß die Anfangsgröße (T°LRi) einem festgelegten Mindest-Anfangswert (T°LRimin) entspricht, wenn die Temperaturdifferenz im Einschaltmoment einen festgelegten Mindestwert (DT°min) annimmt bzw. diesen unterschreitet, und daß das Verhältnis aus der Anfangsgröße (T°LRi) und der Differenz zwischen dem Maximalwert (T°LRmax) der den thermischen Zustand des Leistungsschalters abbildenden Größe (T°LR) und dem Mindest-Anfangswert (T°LRimin) dem Verhältnis aus der Differenz (DT° - DT°min) zwischen der im Einschaltmoment vorhandenen Temperaturdifferenz (DT°) und dem Mindestwert (DT°min) einerseits sowie aus der Differenz (DT°max - DT°min) zwischen der maximalen Temperaturdifferenz (DT°max) und dem genannten Mindestwert (DT°min) andererseits proportional ist.

6. Leistungsschalter nach irgendeinem der Ansprüche 2 bis 5, dadurch gekennzeichnet, daß der Anfangswert (T°LRi) unter einem festgelegten Maximal-Anfangswert (T°LRimax) liegt, der kleiner ist als der Maximalwert (T°LRmax) der den thermischen Zustand des Leistungsschalters abbildenden Größe (T°LR).

7. Leistungsschalter nach irgendeinem der Ansprüche 1 bis 6, dadurch gekennzeichnet, daß die Mittel (18, 22) zur Messung der Temperatur Thermistoren umfassen.

8. Leistungsschalter nach Anspruch 7, dadurch gekennzeichnet, daß er einen in der Nähe der Frontseite des Auslösers angeordneten Thermistor (18) zur Messung der Temperatur in der Kaltzone sowie mindestens einen in der Nähe eines Isolierelements angeordneten Thermistor (22) zur Messung der Temperatur der Heißzone aufweist, wobei das Isolierelement in der Nähe eines Anschlußstücks (12) des Leistungsschalters im hinteren Teil des Leistungsschaltergehäuses plaziert ist.

9. Leistungsschalter nach Anspruch 8, dadurch gekennzeichnet, daß der bzw. die Thermistoren (22) zur Messung der Temperatur in der Heißzone so plaziert sind, daß sie eine im hinteren Teil des Leistungsschaltergehäuses angeordnete Trennwand berühren.

10. Leistungsschalter nach Anspruch 8, dadurch gekennzeichnet, daß der bzw. die Thermistoren (22) zur Messung der Temperatur in der Heißzone auf den an die Anschlußstücke (12) angeschlossenen isolierten Kabeln angeordnet sind.

## Claims

1. A molded case (10) electrical circuit breaker, comprising at least one connection terminal (12) to a conductor designed to be protected by the circuit breaker, detection means of the current (I) flowing in the conductor, measurement means of the temperature in a predetermined zone of the circuit breaker, an electronic trip device, to which the output signals from the current detection means and the temperature measurement means are applied, performing at least a delayed tripping function so as to generate a tripping order when the current (I) exceeds preset thresholds (S), the trip device comprising means designed to modify the time delay (td) in terms of the temperature measured when the circuit breaker closes, the circuit breaker comprising tripping means controlled by said tripping order, a circuit breaker characterized in that the temperature measurement means comprise temperature measurement means (18) in a cold zone of the case and temperature measurement means (22) in a hot zone of the case, in proximity to the connection terminal or terminals (12), the trip device comprising computation means of the temperature difference (DT°) between the hot and cold zones, and means designed to modify the tripping function time delay (td) in a manner inversely proportional to the temperature difference (DT°) measured when the circuit breaker closes.

2. The circuit breaker according to claim 1, wherein the trip device, in order to perform the delayed tripping function, comprises comparison means of a quantity (T°LR) representative of the thermal state of the circuit breaker with a preset maximum value (T°LRmax), means of incrementing (+I 2) this quantity when the current (I) is greater than or equal to a preset tripping threshold (S) and of decrementing (xe -t/τ ) it when the current (I) is lower than said threshold (S), a circuit breaker characterized in that the means designed to modify the time delay (td) comprise initialization means of said quantity (T°LR) when the circuit breaker closes, the initial quantity (T°LRi) being proportional to the temperature difference (DT°) measured when the circuit breaker closes.

3. The circuit breaker according to claim 2, characterized in that the trip device comprises storing means of the hot (T°chd) and cold (T°frd) temperatures measured just before a tripping order is sent, reading means of the stored values when the circuit breaker subsequently closes and computation means of the temperature difference (DT°d) between the hot (T°chd) and cold (T°frd) temperatures on tripping, the initial quantity (T°LRi) being such that the relationship between this initial quantity (T°LRi) and the maximum value (T°LRmax) of the quantity (T°LR) representative of the thermal state of the circuit breaker is proportional to the relationship between the temperature difference (DT°) when the circuit breaker closes and a maximum temperature difference (DT°max), the latter being equal to the temperature difference (DT°d) measured at the time of the previous circuit breaker trip.

4. The circuit breaker according to claim 2, characterized in that the relationship between the initial quantity (T°LRi) and the maximum value (T°LRmax) of the quantity representative of the thermal state of the circuit breaker is proportional to the relationship between the temperature difference (DT°) when the circuit breaker closes and a maximum temperature difference (DT°max) determined according to the circuit breaker type, the circuit breaker rating and the tripping threshold (S).

5. The circuit breaker according to one of claims 3 and 4, characterized in that when the temperature difference (DT°) when the circuit breaker closes is lower than or equal to a preset minimum value (DT°min), the initial quantity (T°LRi) is equal to a preset minimum initial value (T°LRimin), and in that, when the temperature difference (DT°) when the circuit breaker closes is greater than said minimum value (DT°−min), the relationship between the initial quantity (T°LRi) and the difference between the maximum value (T°LRmax) of the quantity (T°LR) representative of the thermal state of the circuit breaker and the minimum initial value (T°LRimin) is proportional to the relationship between on the one hand the difference (DT°-DT°min) between the temperature difference (DT°) when the circuit breaker closes and the minimum value (DT°min), and on the other hand the difference (DT°max-DT°min) between the maximum temperature difference (DT°max) and said minimum value (DT°min).

6. The circuit breaker according to anyone of claims 2 to 6, characterized in that the initial value (T°LRi) is lower than a preset maximum initial value (T°LRimax) lower than the maximum value (T°LRmax) of the quantity (T°LR) representative of the thermal state of the circuit breaker.

7. The circuit breaker according to anyone of claims 1 to 6, characterized in that the temperature measurement means (18, 22) comprise thermistors.

8. The circuit breaker according to claim 7, characterized in that it comprises a thermistor (18), designed to measure the temperature of the cold zone, located in proximity to the front face of the trip device, and at least one thermistor (22), designed to measure the temperature of the hot zone, near an insulating component located in proximity to a connection terminal (12) of the circuit breaker, at the bottom of the circuit breaker case.

9. The circuit breaker according to claim 8, characterized in that the temperature measurement thermistor or thermistors (22) of the hot zone are arranged in such a way as to be in contact with a wall (24) at the bottom of the circuit breaker case.

10. The circuit breaker according to claim 8, characterized in that the temperature measurement thermistor or thermistors (22) of the hot zone are fitted on insulating cables connected to the connection terminals (12).

EP 0 421 892 B1

S

I

I >= S ?

I >= S

I < S

T°LRmax

I

T°LR = T°LR+I²

T°LR

T°LR > T°LRmax ?

T°LR > T°LRmax

T°LR

Ordre d'ouverture

T°LR=0

T°LR

I < S

Z

T°LR

T°LR

$T°LR = T°LR*e^{-\frac{t}{2}}$

T°LR

T°LR

FIG.1

FIG.2

FIG.3

FIG.4

S

T°LRmax

I >= S ?

I >= S

I < S

I

Calibre

type de disjoncteur

I

T°LR

$T°LR = T°LR + I^2$

$T°LR > T°LRmax$ ?

T°LR > T°LRmax

T°LR

Ordre d'ouverture

T°ch

T°ch

T°fr

T°fr

$DT° = T°ch - T°fr$

DT°

Calcul de T°LRi

T°LR = T°LRi

S

T°LR

I < S

τ

T°LR

$T°LR = T°LR * e^{-\frac{t}{\tau}}$

T°LR

T°LR

T°LR

EP 0 421 892 B1

FIG.5

Lecture
T°chd
T°frd

DT°d=
T°chd-T°frd

DT°d

S

I

I >= S ?

T°LRmax

I >= S

I < S

T°ch

T°ch

T°fr

T°fr

DT°=
T°ch-T°fr

DT°

Calibre

type de disjoncteur

DT°d

S

Calcul de
T°LRi

T°LR=T°LRi

T°LR

I

T°LR =
T°LR+I²

T°LR >
T°LRmax ?

T°LR >
T°LRmax

T°LR

Mesure de
T°chd
T°frd

Mémorisation

Ordre
d'ouverture

T°chd
T°frd

I < S

ℤ

T°LR

T°LR =

$T°LR*e^{-\frac{t}{z}}$

T°LR

T°LR

EP 0 421 892 B1

FIG.6

FIG.7

FIG.8